# EUROPEAN PATENT SPECIFICATION

(11) **EP 2 541 733 B1**
(45) Date of publication and mention of the grant of the patent: **19.09.2018**
(21) Application number: 11747509.5
(22) Date of filing: 25.02.2011
(51) Int. Cl.: H02J 7/02

(54) **PORTABLE WIRELESS TERMINAL, WIRELESS TERMINAL DEVICE, AND WIRELESS COMMUNICATION SYSTEM**
TRAGBARES DRAHTLOSES ENDGERÄT, VORRICHTUNG MIT DEM DRAHTLOSEN ENDGERÄT UND DRAHTLOSES KOMMUNIKATIONSSYSTEM
TERMINAL SANS FIL PORTABLE, DISPOSITIF FORMANT TERMINAL SANS FIL ET SYSTÈME DE TRANSMISSION SANS FIL

(30) Priority: 25.02.2010 JP 2010040096
(43) Date of publication of application: 02.01.2013
(73) Proprietor: Olympus Corporation, Tokyo 192-8507 (JP)
(72) Inventor: TOYODA Kiyoshi, Tokyo 192-8507 (JP)
(74) Representative: Gunzelmann, Rainer
(86) International application number: PCT/JP2011/054308
(87) International publication number: WO 2011/105553

(56) References cited:
- EP-A1- 2 086 085
- EP-A2- 1 962 403
- EP-A2- 2 151 907
- WO-A1-2008/056415
- JP-A- 2007 006 415
- JP-A- 2011 045 190
- US-A1- 2007 254 726
- US-A1- 2010 013 319

## Description

### TECHNICAL FIELD

The present invention relates to a portable wireless terminal, a wireless terminal device, and a wireless communication system. Priority is claimed on Japanese Patent Application No. 2010-40096, filed on February 25, 2010.

### BACKGROUND ART

In recent years, spread and development of wireless communication techniques such as wireless LAN (Local Area Network) allow transceivers to be provided with a wireless communication function at a low cost. As a result, pairs of transceivers are more often introduced to general households and corporate facilities, and communication settings are made for the transceivers to conduct wireless communication (for example, settings of ID (identification data) and exchange of cryptographic keys). Furthermore, transceivers are required to further include an application such as frequently changing targets of wireless communication.

In the case of using transceivers wirelessly as described above, it is necessary to drive the transceivers by use of a battery in order to enjoy the merit of not using cables. As the battery, a secondary battery reusable by recharging such as a Ni-Cd (nickel cadmium) battery or a lithium battery is more often used. As a system of recharging the secondary battery, a recharging system utilizing contactless power transmission is established, which utilizes electromagnetic induction or the like to eliminate the necessity of using electric contact. Such a recharging system utilizing contactless power transmission has come into wide use mainly for the products used in damp or wet locations where it is not favorable to use electric contacts. In addition, as an applied technique of contactless power transmission, there is disclosed a technique of superimposing data transmission signals on a contactless power transmission channel (for example, see Patent Document 1). Patent Document 2 discloses a power transmission control device included in a power transmission device in a contactless power transmission system that transmits power from the power transmission device to a power receiving device by electromagnetically coupling a primary coil to a secondary coil to supply the power to a load of the power receiving device. The power transmission control device includes a controller for controlling the power transmission control device, a host interface communicating with a power transmission-side host, and a register section accessible from the power transmission-side host via the host interface. US 2010/0013319 A1 discloses a portable wireless terminal and a wireless terminal device which comprise a single antenna via which power transmission as well as data communication is done.

EP 2 151 907 A2 discloses a portable wireless terminal and a wireless terminal device which comprise an antenna set for power transmission and an antenna set for data communication.

### CITATION LIST

Patent Document 1: Japanese Unexamined Patent Application, First Publication No. 2007-143116
Patent Document 2: US Patent Application Publication No. 2010/013319 A1

However, when a communication system between instruments, which transmit and receive information via a cable, is switched to a wireless communication system, there arises a problem of taking time and trouble in specifying a connection target. For example, if data of an image picked up with a digital camera is transmitted to a personal computer not by means of a USB cable but wireless transmission, all the digital cameras and personal computers covered by means of the electromagnetic waves may transmit the image data. Therefore, communication settings are required to be made in the transmitting/receiving instruments so that only the digital camera(s) and personal computer(s) intended by the operator can conduct communication out of all the digital cameras and personal computers. Furthermore, in view of privacy protection, security settings such as ciphering are required so that unspecified outsiders are not allowed to see what is being communicated between the digital camera and the personal computer. This makes the communication settings more complicated.

In other words, so long as a method of conducting communication via a cable is used, the action of connecting cables can set target instruments that conduct communication. In wireless communication without using a cable, it is required to set the target instruments that conduct communication by a method other than the aforementioned action of connecting cables. However, there is a problem in that this communication setting is complicated.

Furthermore, in the technique of superimposing data transmission signals on a contactless power transmission channel, the contactless power transmission path transmits data at a frequency lower than that used as a carrier frequency of high-speed data transmission (several hundred MHz or higher). Accordingly, it is difficult to improve the data transfer the data transfer rate of the contactless power transfer path. Therefore, the contactless power transmission path is not good to be used for transmitting large volumes of image data and the like in a short period of time.

### DISCLOSURE OF INVENTION

The present invention has been achieved in view of the above problems, and has an object to provide a portable wireless terminal, wireless terminal device and a wireless communication system that allow for facilitating communication settings for wireless communication.

The present invention is a portable wireless terminal, including the features of claim 1. A portable wireless terminal may include: a battery portion that accumulates electric power; a terminal wireless data communication portion that wirelessly communicates information; a terminal communication setting portion that sets predetermined setting information related to wireless communication by the terminal wireless data communication portion; and a power reception antenna that receives electric power for recharging the battery portion in a contactless manner from an external terminal, the power reception antenna transmitting or receiving the setting information to or from the external terminal.

In the portable wireless terminal of the present invention, it is preferable that the power reception antenna transmit or receive, as the setting information, information necessary at a beginning of the wireless communication by the terminal wireless data communication portion.

In the portable wireless terminal of the present invention, it is preferable that the setting information be a user identification data or ciphering data for the wireless communication.

In the portable wireless terminal of the present invention, it is preferable the power reception antenna transmit or receive the setting information during the recharging or the electric power reception.

Furthermore, the present invention is a portable terminal device including the features of claim 6. A portable terminal device may include: a wireless data communication portion that wirelessly communicates information; a communication setting portion that sets predetermined setting information related to wireless communication by the wireless data communication portion; and a power transmission antenna that transmits electric power in a contactless manner to an external terminal, the power transmission antenna transmitting or receiving the setting information to or from the external terminal.

In the portable terminal device of the present invention, it is preferable that the power transmission antenna and the wireless data communication portion be arranged in separate housings.

Furthermore, the present invention is a wireless communication system including the features of claim 9. A wireless communication system may include: a portable wireless terminal and a wireless terminal device, wherein the portable wireless terminal includes: a battery portion that accumulates electric power; a terminal wireless data communication portion that wirelessly communicates information;
a terminal communication setting portion that sets predetermined setting information related to wireless communication by the terminal wireless data communication portion; and a power reception antenna that receives electric power for recharging the battery portion in a contactless manner from the wireless terminal device, the power reception antenna transmitting or receiving the setting information to or from the wireless terminal device, and wherein the wireless terminal device comprises: a wireless data communication portion that wirelessly communicates information; a communication setting portion that sets predetermined setting information related to wireless communication by the wireless data communication portion; and a power transmission antenna that transmits electric power in a contactless manner to the portable wireless terminal, the power transmission antenna transmitting or receiving the setting information to or from the portable wireless terminal.

In the wireless communication system of the present invention, it is preferable that the terminal communication setting portion limit the wireless terminal device with which the terminal wireless data communication portion wirelessly communicates to the wireless terminal device to or from which the power reception antenna transmits or receives the setting information.

In the wireless communication system of the present invention, it is preferable that the communication setting portion limit the portable wireless terminal with which the wireless data communication portion wirelessly communicates to the portable wireless terminal to or from which the power transmission antenna transmits or receives the setting information.

In the wireless communication system of the present invention, it is preferable that a coverage distance of a wireless communication line between the power transmission antenna and the power reception antenna be substantially equal to a distance that electric power is allowed to be transmitted in the contactless manner.

Furthermore, the present invention is a wireless transmission method having the features of claim 14.

Moreover, the present invention is a wireless reception method having the features of claim 15.

On the other hand, the present invention is a wireless communication method having the features of claim 16.

### ADVANTAGEOUS EFFECT OF THE INVENTION

According to the present invention, the power reception antenna that receives electric power for recharging the battery portion in a contactless manner from an external terminal receives or transmits predetermined setting information related to wireless communication by the terminal wireless data communication portion. Therefore, it is possible to make communication settings for conducting wireless communication without troublesome inputs to a wireless instrument.

### BRIEF DESCRIPTION OF THE DRAWINGS

FIG. 1 is a block diagram showing a schematic configuration of a wireless communication system according to a first embodiment of the present invention.
FIG. 2 is a schematic diagram showing a group to which a wireless terminal device and a portable wireless terminal included in the wireless communication system according to the first embodiment of the present invention belong.
FIG 3 is a schematic diagram showing a wireless terminal device and a portable wireless terminal included in a wireless communication system according to a second embodiment of the present invention.

### BEST MODE FOR CARRYING OUT THE INVENTION

### (First embodiment)

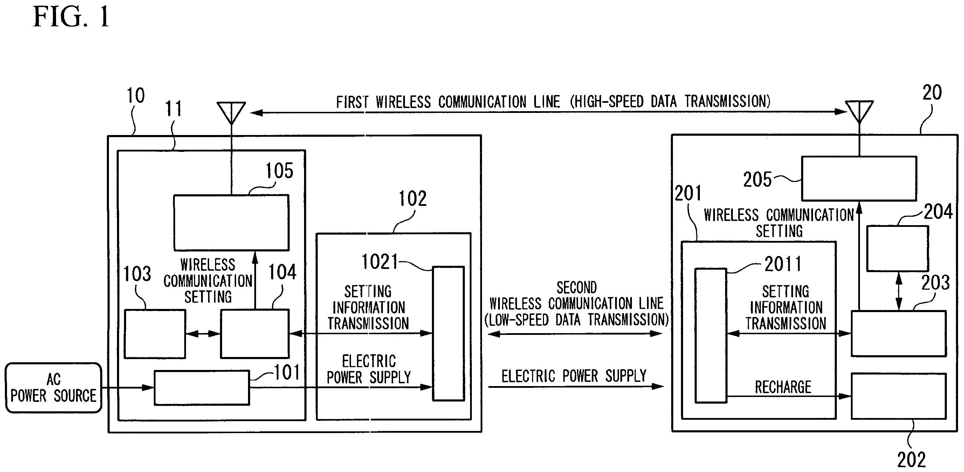

Hereunder is a description of a first embodiment of the present invention with reference to the drawings. FIG. 1 is a block diagram showing a schematic configuration of a wireless communication system of the present embodiment. The wireless communication system includes: a wireless terminal device 10; and a portable wireless terminal 20.

The wireless terminal device 10 includes: a main unit portion 11; and a contactless power transmission portion 102. The main unit portion 11 includes: a power source portion 101; a storage portion 103; a communication setting portion 104; and a high-speed wireless communication portion 105 (wireless data communication portion). The contactless power transmission portion 102 includes a coil antenna 1021 (power transmission antenna). The portable wireless terminal 20 includes: a contactless power reception portion 201; a battery 202; a terminal communication setting portion 203; a terminal storage portion 204; and a terminal high-speed wireless communication portion 205 (terminal wireless data communication portion). The contactless power reception portion 201 includes a coil antenna 2011 (power reception antenna).

The power source portion 101 is connected to a commercial AC power source. The power source portion 101 supplies the electric power, which is supplied from the commercial power source, to the respective portions included in the wireless terminal device 10. The contactless power transmission portion 102 modifies the electric power, which is supplied from the power source portion 101, so as to be efficiently received by the contactless power reception portion 201 of the portable wireless terminal 20, and transmits the modified electric power via the coil antenna 1021. Furthermore, the contactless power transmission portion 102 uses a second wireless communication line to communicate with the contactless power reception portion 201 of the portable wireless terminal 20 via the coil antenna 1021. The second wireless communication line will be described in detail later.

The storage portion 103 stores information necessary for conducting communication by use of a first wireless communication line. The first wireless communication line will be described in detail later. The communication setting portion 104 makes communication settings of the first wireless communication line. The high-speed wireless communication portion 105 uses the first wireless communication line to communicate with the terminal high-speed wireless communication portion 205 of the portable wireless terminal 20.

The contactless power reception portion 201 converts the electric power, which has been received from the contactless power transmission portion 102 via the coil antenna 2011, to direct-current electric power to recharge the battery 202. In addition, the contactless power reception portion 201 uses the second wireless communication line to communicate with the contactless power transmission portion 102 of the wireless terminal device 10 via the coil antenna 2011.

The battery 202 is a secondary battery, which supplies electric power to the respective portions included in the portable wireless terminal 20. The terminal communication setting portion 203 makes communication settings of the first wireless communication line. The terminal storage portion 204 stores information necessary for conducting communication by use of the first wireless communication line. The terminal high-speed wireless communication portion 205 uses the first wireless communication line to communicate with the high-speed wireless communication portion 105 of the wireless terminal device 10.

In the illustration, the main unit portion 11 and the contactless power transmission portion 102 are in separate housings by way of representative example. However, they may be integrated. In addition, the contactless power transmission portion 102 preferably has a shape of a cradle where, when the portable wireless terminal 20 is placed on the contactless power transmission portion 102, the coil antenna 1021 of the contactless power transmission portion 102 and the coil antenna 2011 of the contactless power reception portion 201 are set in a positional relationship favorable for contactless power transmission.

Furthermore, for example, the wireless terminal device 10 is supposed to have a well-developed GUI (Graphical User Interface) as is the case with personal computers. The portable wireless terminal 20 is supposed to have difficulty inputting letters and characters as is the case with digital cameras. The case where the personal computer communicates with the digital camera is a known case.

Next, the first wireless communication line will be described. The first wireless communication line is a high-speed data communication line represented by a wireless LAN standardized as IEEE 802.11a/b/g or the like. The high-speed wireless communication portion 105 of the wireless terminal device 10 and the terminal high-speed wireless communication portion 205 of the portable wireless terminal 20 use the first wireless communication line to communicate with each other. The first wireless communication line typically has a coverage distance of several meters to tens of meters. Within that range, the first wireless communication line enables data exchange at high speeds. The first wireless communication line is not limited to one on a standardized communication system but may be one on an original wireless system.

When the high-speed wireless communication portion 105 of the wireless terminal device 10 and the terminal high-speed wireless communication portion 205 of the portable wireless terminal 20 use the first wireless communication line to communicate with each other, it is necessary for the communication setting portion 104 and the terminal communication setting portion 203 to make communication settings by exchanging information such as a group ID or a cryptographic key. The communication settings include a setting such as specifying a communication target. They are typical settings necessary for conducting communication by use of a wireless LAN or the like. The group ID is a piece of information that is capable of uniquely specifying a group to which the wireless terminal device 10 and the portable wireless terminal 20 belong.

Next, the second wireless communication line will be described. The second wireless communication line is a wireless communication line for which a technique of superimposing data transmission signals on a contactless power transmission channel is used. Therefore, the coil antenna 2011 of the contactless power reception portion 201 is capable of transmitting or receiving the setting information while receiving the electric power from the coil antenna 1021 of the contactless power transmission portion 102 or recharging the battery 202. The distance within which the second wireless communication line can communicate (the distance that the data signal can reach) is substantially the same as the distance that the electric power can be transmitted in a contactless manner.

When communication is conducted between communication instruments by use of a wireless communication line for which the technique of superimposing data transmission signals on a contactless power transmission channel is used, it is difficult for outsiders to intercept the communication because the data transmission distance is short. Therefore, the communication offers high data confidentiality. Furthermore, it is possible to transmit/receive data without making communication settings such as a setting of communication targets. Therefore, if the contactless power transmission portion 102 of the wireless terminal device 10 and the contactless power reception portion 201 of the portable wireless terminal 20 are closer than the transmission distance of the second wireless communication line, it is possible to conduct communication by use of the second wireless communication line without making communication settings.

The frequency used as a carrier frequency for the data transmission by use of the second wireless communication line is lower than that used as a carrier frequency for the high-speed data transmission in recent years (several hundred MHz or higher). Therefore, the second wireless communication line has a low data transmission rate. Furthermore, because the transmission distance of the second wireless communication line is more favorable as it is shorter in view of keeping the data confidentiality, it is preferable to determine the transmission distance based on a tradeoff between usability and distance. In the present embodiment, the contactless power transmission portion 102 of the wireless terminal device 10 and the contactless power reception portion 201 of the portable wireless terminal 20 use the second wireless communication line to transmit/receive information, such as an ID and cryptographic key, which is necessary for conducting communication by use of the first wireless communication line.

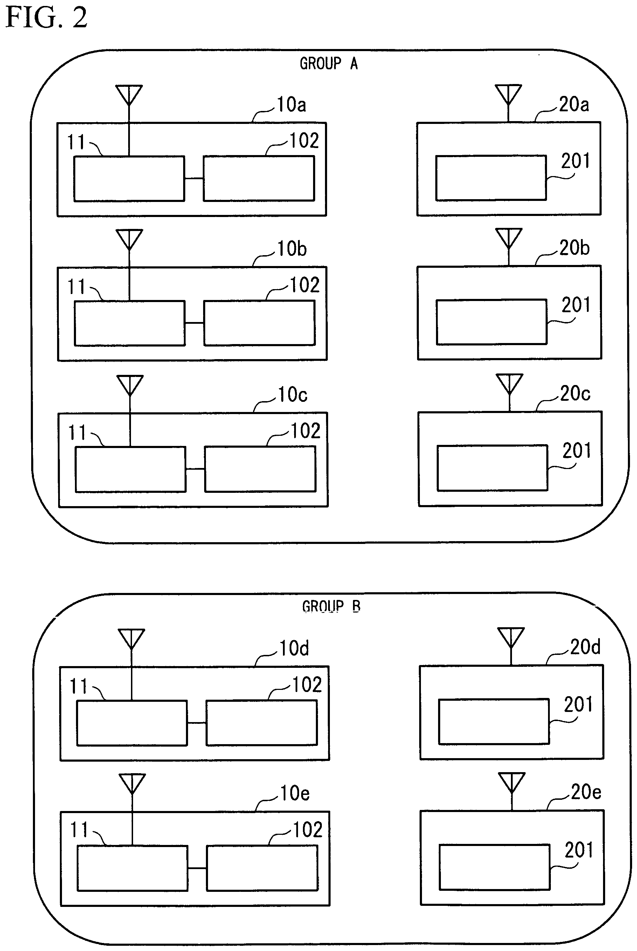

Next, the workings of the present embodiment related especially to the operations of the communication setting portion 104 of the wireless terminal device 10 and the terminal communication setting portion 203 of the portable wireless terminal 20 will be described with reference to FIG 2. FIG. 2 is a schematic diagram showing a group to which the wireless terminal device 10 and the portable wireless terminal 20 included in the wireless communication system of the present embodiment belong.

In the illustration, wireless terminal devices 10a to 10e and portable wireless terminals 20a to 20e are included in the wireless communication system. The wireless terminal devices 10a to 10c and the portable wireless terminals 20a to 20c belong to a group A. The wireless terminal devices 10d, 10e and the portable wireless terminals 20d, 20e belong to a group B. Furthermore, for a reason that the group A and the group B have a different possessor or for other reasons, it is assumed to be necessary that, while the wireless terminal devices 10 and the portable wireless terminals 20 belonging to the same group are set so as to be allowed to communicate with each other, the wireless terminal devices 10a to 10c belonging to the group A and the portable wireless terminals 20d, 20e belonging to the group B be set so as not to be allowed to communicate with each other. Furthermore, it is assumed to be necessary that the wireless terminal devices 10d, 10e belonging to the group B and the portable wireless terminals 20a to 20c belonging to the group A be set so as not to be allowed to communicate with each other.

For example, the system of communication setting for the high-speed wireless communication portion 105 of the wireless terminal device 10 and the terminal high-speed wireless communication portion 205 of the portable wireless terminal 20 to communicate with each other by use of the first wireless communication line is assumed to be a system in which the wireless terminal devices 10a to 10c and the portable wireless terminals 20a to 20c belonging to the group A, and the wireless terminal devices 10d, 10e and the portable wireless terminals 20d, 20e belonging to the group B are not allowed to communicate with each other unless they have a group ID and a cryptographic key that are common in each group.

Next is a description of a method of communication setting that allows the high-speed wireless communication portion 105 of the wireless terminal device 10 and the terminal high-speed wireless communication portion 205 of the portable wireless terminal 20 to communicate with each other by use of the first wireless communication line in the present embodiment. This communication setting is made by the communication setting portion 104 of the wireless terminal device 10 and the terminal communication setting portion 203 of the portable wireless terminal 20.

In the present embodiment, the group ID and the cryptographic key that are previously stored in the storage portion 103 of the wireless terminal device 10 are transmitted to the portable wireless terminal 20 by the communication setting portion 104 by use of the second wireless communication line. It is assumed that a group ID and a cryptographic key are input to the wireless terminal device 10 by a known method and that the group ID and the cryptographic key having been input are stored in the storage portion 103. A simple method of inputting a group ID and a cryptographic key to the wireless terminal device 10 is a method in which the operator utilizes a keyboard, a mouse, or the like provided to the wireless terminal device 10 to input the optionally-determined group ID and cryptographic key.

A procedure of transmitting the group ID and the cryptographic key from the wireless terminal device 10 to the portable wireless terminal 20 by use of the second wireless communication line is as follows. The operator brings the contactless power reception portion 201 of the wireless terminal device 10 close to the contactless power transmission portion 102 of the wireless terminal device 10. When the contactless power transmission portion 102 and the contactless power reception portion 201 are brought closer than the transmission distance of the second wireless communication line, to thereby become capable of communicating with each other by use of the second wireless communication line, then the communication setting portion 104 transmits the group ID and cryptographic key previously stored in the storage portion 103 to the contactless power reception portion 201 via the contactless power transmission portion 102.

The contactless power reception portion 201 receives the transmitted group ID and cryptographic key, and inputs them to the terminal communication setting portion 203. Based on the group ID and cryptographic key that have been input, the terminal communication setting portion 203 makes communication settings of the first wireless communication line, and causes the terminal storage portion 204 to store the group ID and cryptographic key. With these communication settings, the wireless terminal device 10 and the portable wireless terminal 20 that store the same group ID and cryptographic key are allowed to communicate with each other by use of the first wireless communication line.

Therefore, the operator is capable of exchanging the group ID and cryptographic key between the wireless terminal device 10 and the portable wireless terminal 20 only by bringing the contactless power reception portion 201 of the portable wireless terminal 20 close to the contactless power transmission portion 102 of the wireless terminal device 10 such as when recharging by typical contactless power transmission. Furthermore, even if the GUI of the portable wireless terminal 20 is not sufficient, the operator is capable of inputting a group ID and a cryptographic key to the portable wireless terminal 20 in a very simplified manner.

In the case where the wireless terminal devices 10a to 10e and the portable wireless terminals 20a to 20e belong to the group A or the group B as shown in FIG. 2, the operator is capable of exchanging the group ID and cryptographic key between a wireless terminal device 10 and a portable wireless terminal 20 that belong to the same group only by bringing the contactless power reception portion 201 of the portable wireless terminal 20 close to the contactless power transmission portion 102 of the wireless terminal device 10. Therefore, the operator is capable of making settings with ease so that only the wireless terminal devices 10 and portable wireless terminals 20 that belong to the same group are allowed to communicate with each other.

The problem about data confidentiality of the group ID and cryptographic key can be solved by the fact that the communication distance of the second wireless communication line is short. Namely, because the communication distance of the second wireless communication line is short, it is easy to prevent outsiders with malice from coming close to the contactless power transmission portion 102 of the wireless terminal device 10. Because the outsiders, who are prevented from coming close to the contactless power transmission portion 102, are not capable of transmitting the group ID and the cryptographic key to the portable wireless terminal 20, the data confidentiality of the group ID and the cryptographic key is protected. Furthermore, if a verification screen for transferring the group ID and the cryptographic key is provided in the wireless terminal device 10 and an input of a password or the like is prompted, then the confidentiality can be further enhanced.

In the present embodiment, communication among all the instruments belonging to the same group is always available. Therefore, the source and target of the data transmission by use of the first wireless communication line are required to be specified for every session of the data transmission. However, the above problem is not important if the specification is made with a wireless terminal device 10 with a well-developed GUI.

In the above description, the group ID and cryptographic key are exchanged by use of the second wireless communication line. However, the information transmitted/received by use of the second wireless communication line is not limited to this. The information such as for enhancing the data confidentiality may be transmitted by use of the second wireless communication line.

Furthermore, the transmission of the main information transmitted/received by use of the first wireless communication line (for example, images, voices, texts, application files, or the like) is limited within a group. However, this does not deny any communication at all with another group. Controlling communication such as for avoiding collision is conducted also with instruments belonging to another group.

As described above, the wireless terminal device 10 and the portable wireless terminal 20 use the second wireless communication line to exchange the group ID and cryptographic key, to thereby make communication settings of the first wireless communication line. This makes feasible the settings of the first wireless communication without troublesome input of communication setting information. Furthermore, the second wireless communication line is a wireless communication line for which the technique of superimposing data transmission signals on a contactless power transmission channel is used. Therefore, it is possible to make communication settings of the first wireless communication line without the necessity of installing individual antennae for close proximity wireless transmission in the wireless terminal device 10 and the portable wireless terminal 20. This makes possible the reduction in manufacturing costs and the downsizing of the products.

### (Second embodiment)

Hereunder is description of a second embodiment of the present invention. The wireless terminal device 10 and the portable wireless terminal 20 of the present embodiment have similar configurations to those of the first embodiment. In the present embodiment, transmission targets of the main information via the first wireless communication line are limited to one of the wireless terminal devices 10 and one of the portable wireless terminals 20. Namely, an example effective for the case of communication typically called P2P (Peer to Peer) will be described.

To be more specific, the portable wireless terminal 20 includes a CCD (Charge Coupled Device) sensor. It is an image transmission device that transmits a picked-up motion picture (image) to the wireless terminal device 10. The wireless terminal device 10 is a device such as to display the motion picture (image), which has been received from the portable wireless terminal 20, in a realtime manner. The case where these instruments conduct P2P communication will be described by way of example. To be more specific, the present invention is suitable for systems in which, while watching the monitor of the wireless terminal device 10, the operator modifies the orientation, position, and the like of the CCD sensor included in the portable wireless terminal 20, to thereby freely observe various parts of something.

The present invention is also effective in the case where the wireless communication system includes a plurality of wireless terminal devices 10 and portable wireless terminals 20, and the P2P communication pairs between the wireless terminal devices 10 and the portable wireless terminals 20 are frequently changed. Presumable examples in which the P2P communication pairs are required to be frequently changed include a following case. There are a plurality of portable wireless terminals 20 with a CCD sensor that have been used so far. One of them is brought to another room for washing, maintenance, or the like. Then, another portable wireless terminal 20, which is subjected to washing or maintenance in advance, is utilized to wirelessly communicate with the wireless terminal device 10.

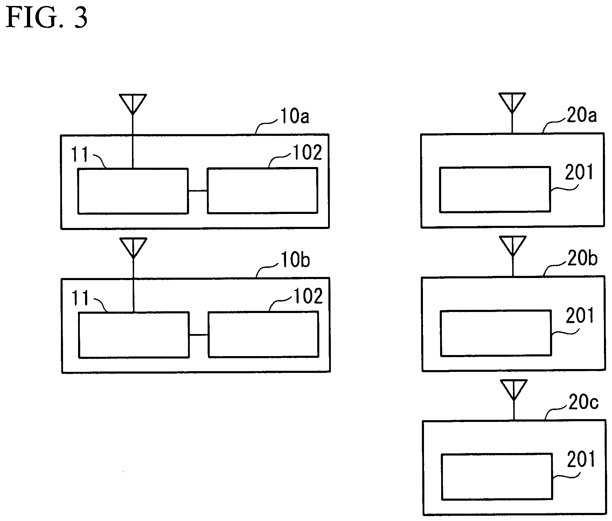

Next, workings of the present embodiment related especially to operations of the communication setting portion 104 of the wireless terminal device 10 and the terminal communication setting portion 203 of the portable wireless terminal 20 will be described with reference to FIG. 3. FIG 3 is a schematic diagram showing the wireless terminal device 10 and portable wireless terminals 20 included in the wireless communication system of the present embodiment. In the illustration, the wireless communication system includes: wireless terminal devices 10a, 10b; and portable wireless terminals 20a to 20c.

Hereunder is a description of an operation for the case where, of the instruments included in the wireless communication system, the wireless terminal device 10a and the portable wireless terminal 20c are used in combination. Firstly, the operator sets the portable wireless terminal 20c onto a contactless power transmission portion 102 of the fixed wireless terminal 10a. On detecting that the portable wireless terminal 20c is set onto the contactless power transmission portion 102 of the wireless terminal device 10a, a communication setting portion 104 of the wireless terminal device 10a and a terminal communication setting portion 203 of the portable wireless terminal 20c use the second wireless communication line to exchange their individual user identification data (UID). The user identification data is information that uniquely identifies the wireless terminal device 10 or the portable wireless terminal 20.

The communication setting portion 104 and the terminal communication setting portion 203 switch their respective target devices to which their respective main information is transmitted (connection targets of P2P communication) to the devices that are uniquely identified by the respective pieces of user identification data they have exchanged.

This operation is a rewriting operation, in which the communication setting portion 104 and the terminal communication setting portion 203 delete the user identification data stored in a storage portion 103 and a terminal storage portion 204. At the same time, the communication setting portion 104 and the terminal communication setting portion 203 cause the storage portion 103 and the terminal storage portion 204 to store the newly-received user identification data. If the communication setting portion 104 and the terminal communication setting portion 203 are programmed to operate in this manner, then in the specific example of transferring a motion picture (image) in a realtime manner, the operator can display the motion picture (image), which is picked up by the CCD sensor included in the portable wireless terminal 20c in front of the operator, on a monitor screen included in the wireless terminal device 10a also in front of the operator, only by setting the portable wireless terminal 20c onto the contactless power transmission portion 102 of the wireless terminal device 10a.

Furthermore, even while an operator is using the wireless terminal device 10a and the portable wireless terminal 20c, another operator can use the wireless terminal device 10c in parallel with the portable wireless terminal 20a or 20b. However, the communication between the wireless terminal device 10 and the portable wireless terminal 20 has an object to conduct P2P communication. Therefore, if a plurality of portable wireless terminals 20 are to have a single wireless terminal device 10, it is necessary to make and control arrangements such as allowing only the firstly-powered portable wireless terminal 20 to communicate with the wireless terminal device 10. However, a later-powered portable wireless terminal 20 may be given highest priority.

As a method in which the communication setting portion 104 of the wireless terminal device 10 and the terminal communication setting portion 203 of the portable wireless terminal 20 detect that the portable wireless terminal 20 has been set onto the contactless power transmission portion 102 of the wireless terminal device 10, representative examples as follows can be conceived. The best method may be selected according to the situation of the wireless communication system.
(1) A method of detecting that the portable wireless terminal 20 has been set onto the contactless power transmission portion 102 of the wireless terminal device 10 in the case where an electromotive voltage produced in the contactless power reception portion 201 of the portable wireless terminal 20 is detected via wireless power transmission. In this case, it is necessary to always keep the contactless power transmission portion 102 of the wireless terminal device 10 in operation. However, if a treatment such as keeping the voltage applied to the contactless power transmission portion 102 low or causing the contactless power transmission portion 102 to operate at intervals is used, it is possible to achieve electric power saving.
(2) A method of detecting that the portable wireless terminal 20 has been set onto the contactless power transmission portion 102 of the wireless terminal device 10 in the case where communication by use of the second communication line is conducted at regular intervals and the communication is successful.
(3) A method of detecting that the portable wireless terminal 20 has been set onto the contactless power transmission portion 102 of the wireless terminal device 10 based on a detection result from a sensor utilizing magnetism such as one made of magnets and a Hall effect sensor or from a sensor utilizing detection of light such as one made of an optical sensor and a photoreceptor device. In this case, it is necessary to install the sensor or the device in the contactless power transmission portion 102 or the portable wireless terminal 20.
(4) A method of detecting that the portable wireless terminal 20 has been set onto the contactless power transmission portion 102 of the wireless terminal device 10 in the case where dedicated contact points, which are provided each on the contactless power transmission portion 102 of the wireless terminal device 10 and on the portable wireless terminal 20, are brought into contact with each other.

The aforementioned methods in which the communication setting portion 104 of the wireless terminal device 10 and the terminal communication setting portion 203 of the portable wireless terminal 20 detect that the portable wireless terminal 20 has been set onto the contactless power transmission portion 102 of the wireless terminal device 10 may be applied to the first embodiment.

Furthermore, as described above, on detecting that the portable wireless terminal 20 has been set onto the contactless power transmission portion 102 of the wireless terminal device 10, the communication setting portion 104 of the wireless terminal device 10 and the terminal communication setting portion 203 of the portable wireless terminal 20 exchange their respective user identification data by use of the second wireless communication line, and then switch their communication targets of their main information to instruments uniquely identified respectively by their user identification data they have exchanged. As a result, a pair of information transmissions by the P2P communication can be set without troublesome inputs. The second wireless communication line is a wireless communication line for which a technique of superimposing data transmission signals on a contactless power transmission channel is used. Therefore, the second wireless communication line can be implemented without the necessity of installing individual antennae for close proximity wireless transmission. This makes possible the reduction in manufacturing costs and the downsizing of the products.

In the aforementioned first embodiment and second embodiment, the description has been for the case where the storage portion 103 of the wireless terminal device 10 stores setting information necessary for conducting communication by use of the first wireless communication line (the group ID and cryptographic key in the first embodiment, and the user identification data in the second embodiment) and where the setting information is transmitted from the wireless terminal device 10 to the portable wireless terminal 20 by use of the second wireless communication line, by way of example. However, the configuration is not limited to this. For example, the terminal storage portion 204 of the portable wireless terminal 20 may store setting information necessary for conducting communication by use of the first wireless communication line, and the setting information may be transmitted from portable wireless terminal 20 to the wireless terminal device 10 by use of the second wireless communication line.

While the first embodiment and second embodiment of the present invention have been described in detail with reference to the drawings, specific configurations are not limited to those of the embodiments, but only by the scope of the appended claims.

### INDUSTRIAL APPLICABILITY

According to the present invention, the power reception antenna that receives electric power for recharging the battery portion in a contactless manner from an external terminal receives or transmits predetermined setting information related to wireless communication by the terminal wireless data communication portion. Therefore, it is possible to make communication settings for conducting wireless communication without troublesome inputs to a wireless instrument.

### DESCRIPTION OF THE REFERENCE SYMBOLS

10, 10a to 10e: wireless terminal device
11: main unit portion
20, 20a to 20e: portable wireless terminal
101: power source portion
102: contactless power transmission portion
103: storage portion
104: communication setting portion
105: high-speed wireless communication portion
201: contactless power reception portion
202: battery
203: terminal communication setting portion
204: terminal storage portion
205: terminal high-speed wireless communication portion
1021, 2011: coil antenna

## Claims

1. A portable wireless terminal (20, 20a, 20b, 20c, 20d, 20e), comprising:
a battery portion (101) configured to accumulate electric power;
a terminal wireless data communication portion (205) configured to wirelessly communicate information; and
a terminal communication setting portion (203) configured to set predetermined setting information related to wireless communication by the terminal wireless data communication portion (205),
**characterized by**
a contactless power reception portion (201) that is different from the terminal wireless data communication portion (205), the contactless power reception portion (201) including a power reception antenna (2011) configured to receive electric power for recharging the battery portion (101) in a contactless manner from an external terminal,
wherein the power reception antenna (2011) is configured to transmit the predetermined setting information to the external terminal or to receive the setting information from the external terminal, and
wherein the terminal communication setting portion (203) is further configured to make communication settings of a wireless communication line used by the terminal wireless data communication portion (205) to perform wireless communication, based on the predetermined setting information which is received by the power reception antenna (2011) of the contactless power reception portion (201) and is input to the terminal communication setting portion (203).

2. The portable wireless terminal (20, 20a, 20b, 20c, 20d, 20e) according to claim 1,
wherein the power reception antenna (2011) is configured to transmit or receive, as the setting information, information necessary at a beginning of the wireless communication by the terminal wireless data communication portion (205).

3. The portable wireless terminal (20, 20a, 20b, 20c, 20d, 20e) according to claim 1,
wherein the setting information is a user identification data or ciphering data for the wireless communication.

4. The portable wireless terminal (20, 20a, 20b, 20c, 20d, 20e) according to claim 1,
wherein the power reception antenna (2011) is configured to transmit or receive the setting information during the recharging or the electric power reception.

5. The portable wireless terminal (20, 20a, 20b, 20c, 20d, 20e) according to claim 1, further comprising a terminal storage portion (204) that stores user identification data as the setting information,
wherein the user identification data is information that is used for uniquely identifying the external terminal, and
wherein the terminal communication setting portion (203) is configured to rewrite the user identification data stored in the terminal storage portion (204) with received user identification data, when the power reception antenna (2011) receives different user identification data compared with the user identification data stored in the terminal storage portion (204).

6. A wireless terminal device (10, 10a, 10b, 10c, 10d, 10e) comprising:
a wireless data communication portion (105) configured to wirelessly communicate information;
a communication setting portion (104) configured to set predetermined setting information related to wireless communication by the wireless data communication portion (105); and
a contactless power transmission portion (102) that is different from the wireless data communication portion (105), the power transmission portion (102) including a power transmission antenna (1021) configured to transmit electric power in a contactless manner to an external terminal,
wherein the power transmission antenna (1021) is configured to transmit the predetermined setting information to the external terminal or to receive the setting information from the external terminal, and
wherein the communication setting portion (104) is further configured to make communication settings of a wireless communication line used by the wireless data communication portion (105) to perform wireless communication, based on the predetermined setting information which is received by the power transmission antenna (1021) of the contactless power transmission portion (102) and is input to the communication setting portion (104).

7. The wireless terminal device (10, 10a, 10b, 10c, 10d, 10e) according to claim 6,
wherein the power transmission antenna (1021) and the wireless data communication portion (105) are arranged in separate housings.

8. The wireless terminal device (10, 10a, 10b, 10c, 10d, 10e) according to claim 6, further comprising a storage portion (103) that stores user identification data as the setting information,
wherein the user identification data is information that is used for uniquely identifying the external terminal, and
wherein the communication setting portion (104) is configured to rewrite the user identification data stored in the storage portion (103) with received user identification data, when the power transmission antenna (1021) receives different user identification data compared with the user identification data stored in the storage portion (103).

9. A wireless communication system comprising:
a portable wireless terminal (20, 20a, 20b, 20c, 20d, 20e) according to claim 1, and a wireless terminal device (10, 10a, 10b, 10c, 10d, 10e) according to claim 6.

10. The wireless communication system according to claim 9,
wherein the terminal communication setting portion (203) is configured to limit the wireless terminal device (10, 10a, 10b, 10c, 10d, 10e) with which the terminal wireless data communication portion (205) wirelessly communicates to the wireless terminal device (10, 10a, 10b, 10c, 10d, 10e) to or from which the power reception antenna (2011) transmits or receives the setting information.

11. The wireless communication system according to claim 9,
wherein the communication setting portion (104) is configured to limit the portable wireless terminal (20, 20a, 20b, 20c, 20d, 20e) with which the wireless data communication portion (205) wirelessly communicates to the portable wireless terminal (20, 20a, 20b, 20c, 20d, 20e) to or from which the power transmission antenna (1021) transmits or receives the setting information.

12. The wireless communication system according to claim 9,
wherein a coverage distance of a wireless communication line between the power transmission antenna (1021) and the power reception antenna (2011) is substantially equal to a distance that electric power is allowed to be transmitted in the contactless manner.

13. The wireless communication system according to claim 9,
wherein the portable wireless terminal (20, 20a, 20b, 20c, 20d, 20e) further includes a terminal storage portion (204) that stores user identification data as the setting information,
wherein the wireless terminal device (10, 10a, 10b, 10c, 10d, 10e) further includes a storage portion (103) that stores the user identification data as the setting information,
wherein the user identification data is information that is used for uniquely identifying the portable wireless terminal (20, 20a, 20b, 20c, 20d, 20e) and the wireless terminal device (10, 10a, 10b, 10c, 10d, 10e),
wherein the terminal communication setting portion (203) is configured to rewrite the user identification data stored in the terminal storage portion (204) with received user identification data, when the power reception antenna (2011) receives different user identification data compared with the user identification data stored in the terminal storage portion (204), and
wherein the communication setting portion (104) is configured to rewrite the user identification data stored in the storage portion (103) with received user identification data, when the power transmission antenna (1021) receives different user identification data compared with the user identification data stored in the storage portion (104).

14. A wireless transmission method, comprising:
accumulating electric power in a battery portion (101);
wirelessly communicating information by a terminal wireless data communication portion (205);
setting predetermined setting information by a terminal communication setting portion (203);
receiving electric power for recharging the battery portion (101) in a contactless manner from an external terminal by a power reception antenna (2011) of a contactless power reception portion (201) that is different from the terminal wireless data communication portion (205); and
transmitting the setting information to the external terminal or receiving the setting information from the external terminal by the power reception antenna (2011),
wherein the terminal wireless data communication portion (203) is further configured to make communication settings of a wireless communication line used by the terminal wireless data communication portion (205) to perform wireless communication, based on the predetermined setting information which is received by the power reception antenna (2011) of the contactless power reception portion (201) and is input to the terminal communication setting portion (203), and
wherein the contactless power reception portion (201) is different from the terminal wireless data communication portion (205).

15. A wireless reception method, comprising:
wirelessly communicating information by a wireless data communication portion (105);
setting predetermined setting information by a communication setting portion (104);
transmitting electric power in a contactless manner to an external terminal by a power transmission antenna (1021) of a contactless power transmission portion (102) that is different from the wireless data communication portion (105); and
transmitting the setting information to the external terminal or receiving the setting information from the external terminal by the power transmission antenna (1021),
wherein the communication setting portion (104) is further configured to make communication settings of a wireless communication line used by the wireless data communication portion (105) to perform wireless communication, based on the predetermined setting information which is received by the power transmission antenna (1021) of the contactless power transmission portion (102) and is input to the communication setting portion (104), and
wherein the power transmission portion (102) is different from the wireless data communication portion (105).

16. A wireless communication method between a portable wireless terminal (20, 20a, 20b, 20c, 20d, 20e) and a wireless terminal device (10, 10a, 10b, 10c, 10d, 10e), comprising a wireless transmission method according to claim 14 performed by the portable wireless terminal (20, 20a, 20b, 20c, 20d, 20e) and a wireless reception method according to claim 15 performed by the wireless terminal device (10, 10a, 10b, 10c, 10d, 10e).

## Patentansprüche

1. Tragbares drahtloses Endgerät (20, 20a, 20b, 20c, 20d, 20e), umfassend:
einen Akkumulatorabschnitt (101), der dazu ausgelegt ist, elektrische Energie zu sammeln;
einen drahtlosen Endgerätdatenkommunikationsabschnitt (205), der dazu ausgelegt ist, Information drahtlos zu kommunizieren; und
einen Endgerätkommunikationseinstellabschnitt (203), der dazu ausgelegt ist, vorbestimmte Einstellinformation bezogen auf die drahtlose Kommunikation durch den drahtlosen Endgerätdatenkommunikationsabschnitt (205) einzustellen,
**gekennzeichnet durch**
einen kontaktlosen Energieempfangsabschnitt (201), der sich von dem drahtlosen Endgerätdatenkommunikationsabschnitt (205) unterscheidet, wobei der kontaktlose Energieempfangsabschnitt (201) eine Energieempfangsantenne (2011) umfasst, die dazu ausgelegt ist, elektrische Energie zum Wiederaufladen des Akkumulatorabschnitts (101) kontaktlos von einem externen Endgerät zu empfangen,
wobei die Energieempfangsantenne (2011) dazu ausgelegt ist, die vorbestimmte Einstellinformation an das externe Endgerät zu senden oder die Einstellinformation von dem externen Endgerät zu empfangen, und
wobei der Endgerätkommunikationseinstellabschnitt (203) ferner dazu ausgelegt ist, Kommunikationseinstellungen einer drahtlosen Kommunikationsleitung, die von dem drahtlosen Endgerätdatenkommunikationsabschnitt (205) genutzt wird, um die drahtlose Kommunikation durchzuführen, basierend auf der vorbestimmten Einstellinformation vorzunehmen, die von der Energieempfangsantenne (2011) des kontaktlosen Energieempfangsabschnitts (201) empfangen und in den Kommunikationseinstellabschnitt (203) des Endgeräts eingegeben wird.

2. Tragbares drahtloses Endgerät (20, 20a, 20b, 20c, 20d, 20e) nach Anspruch 1,
wobei die Energieempfangsantenne (2011) dazu ausgelegt ist, als Einstellinformation, Information, die zu Beginn der drahtlosen Kommunikation notwendig ist, durch den drahtlosen Datenkommunikationsabschnitt (205) des Endgeräts zu senden oder zu empfangen.

3. Tragbares drahtloses Endgerät (20, 20a, 20b, 20c, 20d, 20e) nach Anspruch 1,
wobei es sich bei der Einstellinformation um Nutzeridentifikationsdaten oder Verschlüsselungsdaten für die drahtlose Kommunikation handelt.

4. Tragbares drahtloses Endgerät (20, 20a, 20b, 20c, 20d, 20e) nach Anspruch 1,
wobei die Energieempfangsantenne (2011) dazu ausgelegt ist, die Einstellinformation während des Wiederaufladens oder des Empfangs der elektrischen Leistung zu senden oder zu empfangen.

5. Tragbares drahtloses Endgerät (20, 20a, 20b, 20c, 20d, 20e) nach Anspruch 1, das ferner einen Endgerätspeicherabschnitt (204) umfasst, der
Nutzeridentifikationsdaten als Einstellinformation speichert,
wobei es sich bei den Nutzeridentifikationsdaten um eine Information handelt, die zum eindeutigen Identifizieren des externen Endgeräts genutzt wird, und
wobei der Endgerätkommunikationseinstellabschnitt (203) dazu ausgelegt ist, die in dem Endgerätspeicherabschnitt (204) gespeicherten Nutzerinformationsdaten mit den empfangenen Nutzeridentifikationsdaten zu überschreiben, wenn die Energieempfangsantenne (2011), im Vergleich zu den in dem Endgerätspeicherabschnitt (204) gespeicherten Nutzeridentifikationsdaten, andere Nutzeridentifikationsdaten empfängt.

6. Drahtloses Endgerät (10, 10a, 10b, 10c, 10d, 10e), umfassend:
einen drahtlosen Datenkommunikationsabschnitt (105), der dazu ausgelegt ist, Information drahtlos zu kommunizieren;
einen Kommunikationseinstellabschnitt (104), der dazu ausgelegt ist, vorbestimmte Einstellinformation bezogen auf die drahtlose Kommunikation mittels des drahtlosen Datenkommunikationsabschnitts (105) einzustellen; und
einen kontaktlosen Energiesendeabschnitt (102), der sich von dem drahtlosen Datenkommunikationsabschnitt (105) unterscheidet, wobei der Energiesendeabschnitt (102) eine Energiesendeantenne (1021) umfasst, die dazu ausgelegt ist, elektrische Energie kontaktlos an ein externes Endgerät zu senden,
wobei die Energiesendeantenne (1021) dazu ausgelegt ist, die vorbestimmte Einstellinformation an das externe Endgerät zu senden oder die Einstellinformation von dem externen Endgerät zu empfangen, und
wobei der Kommunikationseinstellabschnitt (104) ferner dazu ausgelegt ist, Kommunikationseinstellungen einer drahtlosen Kommunikationsleitung, die von dem drahtlosen Datenkommunikationsabschnitt (105) genutzt wird, um drahtlose Kommunikation durchzuführen, basierend auf der vorbestimmten Einstellinformation vorzunehmen, die von der Energiesendeantenne (1021) des kontaktlosen Energiesendeabschnitts (102) empfangen und in den Kommunikationseinstellabschnitt (104) eingegeben wird.

7. Drahtloses Endgerät (10, 10a, 10b, 10c, 10d, 10e) nach Anspruch 6,
wobei die Energiesendeantenne (1021) und der drahtlose Datenkommunikationsabschnitt (105) in separaten Gehäusen angeordnet sind.

8. Drahtloses Endgerät (10, 10a, 10b, 10c, 10d, 10e) nach Anspruch 6, ferner umfassend einen Speicherabschnitt (103), der Nutzeridentifikationsdaten als Einstellinformation speichert,
wobei es sich bei den Nutzeridentifikationsdaten um eine Information handelt, die zum eindeutigen Identifizieren des externen Endgeräts genutzt wird, und
wobei der Kommunikationseinstellabschnitt (104) dazu ausgelegt ist, die in dem Speicherabschnitt (103) gespeicherten Nutzerinformationsdaten mit den empfangenen Nutzeridentifikationsdaten zu überschreiben, wenn die Energiesendeantenne (1021) im Vergleich zu den in dem Speicherabschnitt (103) gespeicherten Nutzeridentifikationsdaten, andere Nutzeridentifikationsdaten empfängt.

9. Drahtloses Kommunikationssystem, umfassend:
ein tragbares drahtloses Endgerät (20, 20a, 20b, 20c, 20d, 20e) nach Anspruch 1 und ein drahtloses Endgerät (10, 10a, 10b, 10c, 10d, 10e) nach Anspruch 6.

10. Drahtloses Kommunikationssystem nach Anspruch 9,
wobei der Endgerätkommunikationseinstellabschnitt (203) dazu ausgelegt ist, das drahtlose Endgerät (10, 10a, 10b, 10c, 10d, 10e), mit der der drahtlose Endgerätdatenkommunikationsabschnitt (205) drahtlos kommuniziert, auf das drahtlosen Endgerät (10, 10a, 10b, 10c, 10d, 10e) zu begrenzen, an das die Energieempfangsantenne (2011) die Einstellinformation sendet oder von der sie sie empfängt.

11. Drahtloses Kommunikationssystem nach Anspruch 9,
wobei der Kommunikationseinstellabschnitt (104) dazu ausgelegt ist, das tragbare drahtlose Endgerät (20, 20a, 20b, 20c, 20d, 20e), mit dem der drahtlose Datenkommunikationsabschnitt (205) drahtlos kommuniziert, auf das tragbare drahtlose Endgerät (20, 20a, 20b, 20c, 20d, 20e) zu begrenzen, an das die Stromsendeantenne (1021) die Einstellinformation sendet oder von dem sie sie empfängt.

12. Drahtloses Kommunikationssystem nach Anspruch 9,
wobei eine Abdeckungsreichweite einer drahtlosen Kommunikationsleitung zwischen der Stromsendeantenne (1021) und der Stromempfangsantenne (2011) im Wesentlichen gleich einer Reichweite ist, die die elektrische Energie kontaktlos gesendet werden kann.

13. Drahtloses Kommunikationssystem nach Anspruch 9,
wobei das tragbare drahtlose Endgerät (20, 20a, 20b, 20c, 20d, 20e) ferner einen Endgerätspeicherabschnitt (204) umfasst, der Nutzeridentifikationsdaten als Einstellinformation umfasst,
wobei das drahtlose Endgerät (10, 10a, 10b, 10c, 10d, 10e) ferner einen Speicherabschnitt (103) umfasst, der die Nutzeridentifikationsdaten als die Einstellinformation speichert,
wobei es sich bei den Nutzeridentifikationsdaten um Information handelt, die zum eindeutigen Identifizieren des tragbaren drahtlosen Endgeräts (20, 20a, 20b, 20c, 20d, 20e) und des drahtlosen Endgeräts (10, 10a, 10b, 10c, 10d, 10e) verwendet wird,
wobei der Endgerätkommunikationseinstellabschnitt (203) dazu ausgelegt ist, die in dem Endgerätspeicherabschnitt (204) gespeicherten Nutzerinformationsdaten mit den empfangenen Nutzeridentifikationsdaten zu überschreiben, wenn die Energieempfangsantenne (2011) im Vergleich zu den in dem Endgerätspeicherabschnitt (204) gespeicherten Nutzeridentifikationsdaten andere Nutzeridentifikationsdaten empfängt, und
wobei der Kommunikationseinstellabschnitt (104) dazu ausgelegt ist, die in dem Speicherabschnitt (103) gespeicherten Nutzerinformationsdaten mit den empfangenen Nutzeridentifikationsdaten zu überschreiben, wenn die Energiesendeantenne (1021) im Vergleich zu den in dem Speicherabschnitt (104) gespeicherten Nutzeridentifikationsdaten andere Nutzeridentifikationsdaten empfängt.

14. Drahtloses Sendeverfahren, umfassend:
Sammeln elektrischer Energie in einem Akkumulatorabschnitt (101);
drahtloses Kommunizieren von Information durch einen drahtlosen Endgerätdatenkommunikationsabschnitt (205);
Einstellen vorbestimmter Einstellinformation durch einen Endgerätkommunikationseinstellabschnitt (203);
Empfangen elektrischer Energie zum kontaktlosen Wiederaufladen des Akkumulatorabschnitts (101) von einem externen Endgerät durch eine Energieempfangsantenne (2011) eines kontaktlosen Energieempfangsabschnitts (201), der sich von dem drahtlosen Endgerätdatenkommunikationsabschnitt (205) unterscheidet; und
Senden der Einstellinformation an das externe Endgerät oder Empfangen der Einstellinformation von dem externen Endgerät durch die Energieempfangsantenne (2011),
wobei der drahtlose Endgerätdatenkommunikationsabschnitt (203) ferner dazu ausgelegt ist, Kommunikationseinstellungen einer drahtlosen Kommunikationsleitung, die von dem drahtlosen Endgerätdatenkommunikationsabschnitt (205) genutzt wird, um die drahtlose Kommunikation durchzuführen, basierend auf der vorbestimmten Einstellinformation vorzunehmen, die von der Energieempfangsantenne (2011) des kontaktlosen Energieempfangsabschnitts (201) empfangen und in den Endgerätkommunikationseinstellabschnitt (203) eingegeben wird, und
wobei sich der kontaktlose Energieempfangsabschnitt (201) von dem drahtlosen Endgerätdatenkommunikationsabschnitt (205) unterscheidet.

15. Drahtloses Empfangsverfahren, umfassend:
drahtloses Kommunizieren von Information durch einen drahtlosen Datenkommunikationsabschnitt (105);
Einstellen vorbestimmter Einstellinformation durch einen Kommunikationseinstellabschnitt (104);
kontaktloses Senden elektrischer Energie an ein externes Endgerät durch eine Energiesendeantenne (1021) eines kontaktlosen Energiesendeabschnitts (102), der sich von dem drahtlosen Datenkommunikationsabschnitt (105) unterscheidet; und
Senden der Einstellinformation an das externe Endgerät oder Empfangen der Einstellinformation von dem externen Endgerät durch die Energiesendeantenne (1021),
wobei der Kommunikationseinstellabschnitt (104) ferner dazu ausgelegt ist, Kommunikationseinstellungen einer drahtlosen Kommunikationsleitung, die von dem drahtlosen Datenkommunikationsabschnitt (105) genutzt wird, um die drahtlose Kommunikation durchzuführen, basierend auf der vorbestimmten Einstellinformation vorzunehmen, die von der Energiesendeantenne (1021) des kontaktlosen Energiesendeabschnitts (102) empfangen und in den Kommunikationseinstellabschnitt (104) eingegeben wird, und
wobei sich der Energiesendeabschnitt (102) von dem drahtlosen Datenkommunikationsabschnitt (105) unterscheidet.

16. Drahtloses Kommunikationsverfahren zwischen einem tragbaren drahtlosen Endgerät (20, 20a, 20b, 20c, 20d, 20e) und einem drahtlosen Endgerät (10, 10a, 10b, 10c, 10d, 10e), das ein drahtloses Sendeverfahren nach Anspruch 14 umfasst, das von dem tragbaren drahtlosen Endgerät (20, 20a, 20b, 20c, 20d, 20e) durchgeführt wird, und ein drahtloses Empfangsverfahren nach Anspruch 15, das von der dem drahtlosen Endgerät (10, 10a, 10b, 10c, 10d, 10e) durchgeführt wird.

## Revendications

1. Terminal sans fil portable (20, 20a, 20b, 20c, 20d, 20e), comprenant :
une partie batterie (101) configurée pour accumuler de l'énergie électrique ; une partie de communication de données sans fil de terminal (205) configurée pour communiquer sans fil des informations ; et
une partie de réglage de communication de terminal (203) configurée pour définir des informations de réglage prédéterminées relatives à une communication sans fil par la partie de communication de données sans fil de terminal (205),
**caractérisé par** :
une partie de réception d'énergie sans contact (201) qui est différente de la partie de communication de données sans fil de terminal (205), la partie de réception d'énergie sans contact (201) comprenant une antenne de réception d'énergie (2011) configurée pour recevoir de l'énergie électrique pour recharger la partie batterie (101) d'une manière sans contact à partir d'un terminal externe,
l'antenne de réception d'énergie (2011) étant configurée pour transmettre les informations de réglage prédéterminées au terminal externe ou pour recevoir les informations de réglage en provenance du terminal externe, et
la partie de réglage de communication de terminal (203) étant en outre configurée pour faire des réglages de communication d'une ligne de communication sans fil utilisée par la partie de communication de données sans fil de terminal (205) pour réaliser une communication sans fil, sur la base des informations de réglage prédéterminées qui sont reçues par l'antenne de réception d'énergie (2011) de la partie de réception d'énergie sans contact (201) et qui sont entrées dans la partie de réglage de communication de terminal (203).

2. Terminal sans fil portable (20, 20a, 20b, 20c, 20d, 20e) selon la revendication 1,
dans lequel l'antenne de réception d'énergie (2011) est configurée pour émettre ou recevoir, en tant qu'informations de réglage, des informations nécessaires à un début de la communication sans fil par la partie de communication de données sans fil de terminal (205).

3. Terminal sans fil portable (20, 20a, 20b, 20c, 20d, 20e) selon la revendication 1,
dans lequel les informations de réglage sont des données d'identification d'utilisateur ou des données de chiffrement pour la communication sans fil.

4. Terminal sans fil portable (20, 20a, 20b, 20c, 20d, 20e) selon la revendication 1,
dans lequel l'antenne de réception d'énergie (2011) est configurée pour émettre ou recevoir les informations de réglage pendant la recharge ou la réception d'énergie électrique.

5. Terminal sans fil portable (20, 20a, 20b, 20c, 20d, 20e) selon la revendication 1, comprenant en outre une partie de stockage de terminal (204) qui stocke des données d'identification d'utilisateur en tant qu'informations de réglage,
les données d'identification d'utilisateur étant des informations qui sont utilisées exclusivement pour identifier le terminal externe, et
la partie de réglage de communication de terminal (203) étant configurée pour réécrire les données d'identification d'utilisateur stockées dans la partie de stockage de terminal (204) par des données d'identification d'utilisateur reçues, lorsque l'antenne de réception d'énergie (2011) reçoit des données d'identification d'utilisateur différentes par comparaison avec les données d'identification d'utilisateur stockées dans la partie de stockage de terminal (204).

6. Dispositif de terminal sans fil (10, 10a, 10b, 10c, 10d, 10e) comprenant :
une partie de communication de données sans fil (105) configurée pour communiquer sans fil des informations ;
une partie de réglage de communication (104) configurée pour définir des informations de réglage prédéterminées relatives à une communication sans fil par la partie de communication de données sans fil (105) ; et
une partie de transmission d'énergie sans contact (102) qui est différente de la partie de communication de données sans fil (105), la partie de transmission d'énergie (102) comprenant une antenne de transmission d'énergie (1021) configurée pour transmettre de l'énergie électrique d'une manière sans contact à un terminal externe,
l'antenne de transmission d'énergie (1021) étant configurée pour transmettre les informations de réglage prédéterminées au terminal externe ou pour recevoir les informations de réglage en provenance du terminal externe, et
la partie de réglage de communication (104) étant en outre configurée pour faire des réglages de communication d'une ligne de communication sans fil utilisée par la partie de communication de données sans fil (105) pour réaliser une communication sans fil, sur la base des informations de réglage prédéterminées qui sont reçues par l'antenne de transmission d'énergie (1021) de la partie de transmission d'énergie sans contact (102) et qui sont entrées dans la partie de réglage de communication (104).

7. Dispositif de terminal sans fil (10, 10a, 10b, 10c, 10d, 10e) selon la revendication 6,
dans lequel l'antenne de transmission d'énergie (1021) et la partie de communication de données sans fil (105) sont disposées dans des boîtiers distincts.

8. Dispositif de terminal sans fil (10, 10a, 10b, 10c, 10d, 10e) selon la revendication 6, comprenant en outre une partie de stockage (103) qui stocke des données d'identification d'utilisateur en tant qu'informations de réglage,
les données d'identification d'utilisateur étant des informations qui sont utilisées exclusivement pour identifier le terminal externe, et
la partie de réglage de communication (104) étant configurée pour réécrire les données d'identification d'utilisateur stockées dans la partie de stockage (103) par des données d'identification d'utilisateur reçues, lorsque l'antenne de transmission d'énergie (1021) reçoit des données d'identification d'utilisateur différentes par comparaison avec les données d'identification d'utilisateur stockées dans la partie de stockage (103).

9. Système de communication sans fil comprenant :
un terminal sans fil portable (20, 20a, 20b, 20c, 20d, 20e) selon la revendication 1, et un dispositif de terminal sans fil (10, 10a, 10b, 10c, 10d, 10e) selon la revendication 6.

10. Système de communication sans fil selon la revendication 9,
dans lequel la partie de réglage de communication de terminal (203) est configurée pour limiter le dispositif de terminal sans fil (10, 10a, 10b, 10c, 10d, 10e), avec lequel la partie de communication de données sans fil de terminal (205) communique sans fil, au dispositif de terminal sans fil (10, 10a, 10b, 10c, 10d, 10e) auquel ou à partir duquel l'antenne de réception d'énergie (2011) transmet ou reçoit les informations de réglage.

11. Système de communication sans fil selon la revendication 9,
dans lequel la partie de réglage de communication (104) est configurée pour limiter le terminal sans fil portable (20, 20a, 20b, 20c, 20d, 20e), avec lequel la partie de communication de données sans fil (205) communique sans fil, au terminal sans fil portable (20, 20a, 20b, 20c, 20d, 20e) auquel ou à partir duquel l'antenne de transmission d'énergie (1021) transmet ou reçoit les informations de réglage.

12. Système de communication sans fil selon la revendication 9,
dans lequel une distance de couverture d'une ligne de communication sans fil entre l'antenne de transmission d'énergie (1021) et l'antenne de réception d'énergie (2011) est sensiblement égale à une distance à laquelle l'énergie électrique peut être transmise d'une manière sans contact.

13. Système de communication sans fil selon la revendication 9, dans lequel
le terminal sans fil portable (20, 20a, 20b, 20c, 20d, 20e) comprend en outre une partie de stockage de terminal (204) qui stocke des données d'identification d'utilisateur en tant qu'informations de réglage,
le dispositif de terminal sans fil (10, 10a, 10b, 10c, 10d, 10e) comprend en outre une partie de stockage (103) qui stocke les données d'identification d'utilisateur en tant qu'informations de réglage,
les données d'identification d'utilisateur étant des informations qui sont utilisées exclusivement pour identifier le terminal sans fil portable (20, 20a, 20b, 20c, 20d, 20e) et le dispositif de terminal sans fil (10, 10a, 10b, 10c, 10d, 10e),
la partie de réglage de communication de terminal (203) étant configurée pour réécrire les données d'identification d'utilisateur stockées dans la partie de stockage de terminal (204) par des données d'identification d'utilisateur reçues, lorsque l'antenne de réception d'énergie (2011) reçoit des données d'identification d'utilisateur différentes par comparaison avec les données d'identification d'utilisateur stockées dans la partie de stockage de terminal (204), et
la partie de réglage de communication (104) étant configurée pour réécrire les données d'identification d'utilisateur stockées dans la partie de stockage (103) par des données d'identification d'utilisateur reçues, lorsque l'antenne de transmission d'énergie (1021) reçoit des données d'identification d'utilisateur différentes par comparaison avec les données d'identification d'utilisateur stockées dans la partie de stockage (104).

14. Procédé de transmission sans fil, comprenant :
accumuler de l'énergie électrique dans une partie batterie (101) ;
communiquer sans fil des informations par une partie de communication de données sans fil de terminal (205) ;
définir des informations de réglage prédéterminées par une partie de réglage de communication de terminal (203) ;
recevoir de l'énergie électrique pour recharger la partie batterie (101) d'une manière sans contact à partir d'un terminal externe par une antenne de réception d'énergie (2011) d'une partie de réception d'énergie sans contact (201) qui est différente de la partie de communication de données sans fil de terminal (205) ; et
transmettre les informations de réglage au terminal externe ou recevoir les informations de réglage en provenance du terminal externe par l'antenne de réception d'énergie (2011),
la partie de communication de données sans fil de terminal (203) étant en outre configurée pour faire des réglages de communication d'une ligne de communication sans fil utilisée par la partie de communication de données sans fil de terminal (205) pour réaliser une communication sans fil, sur la base des informations de réglage prédéterminées qui sont reçues par l'antenne de réception d'énergie (2011) de la partie de réception d'énergie sans contact (201) et qui sont entrées dans la partie de réglage de communication de terminal (203), et
la partie de réception d'énergie sans contact (201) étant différente de la partie de communication de données sans fil de terminal (205).

15. Procédé de réception sans fil, comprenant :
communiquer sans fil des informations par une partie de communication de données sans fil (105) ;
définir des informations de réglage prédéterminées par une partie de réglage de communication (104) ;
transmettre de l'énergie électrique d'une manière sans contact à un terminal externe par une antenne de transmission d'énergie (1021) d'une partie de transmission d'énergie sans contact (102) qui est différente de la partie de communication de données sans fil (105) ; et
transmettre les informations de réglage au terminal externe ou recevoir les informations de réglage en provenance du terminal externe par l'antenne de transmission d'énergie (1021),
la partie de réglage de communication (104) étant en outre configurée pour faire des réglages de communication d'une ligne de communication sans fil utilisée par la partie de communication de données sans fil (105) pour réaliser une communication sans fil, sur la base des informations de réglage prédéterminées qui sont reçues par l'antenne de transmission d'énergie (1021) de la partie de transmission d'énergie sans contact (102) et qui sont entrées dans la partie de réglage de communication (104), et
la partie de transmission d'énergie (102) étant différente de la partie de communication de données sans fil (105).

16. Procédé de communication sans fil entre un terminal sans fil portable (20, 20a, 20b, 20c, 20d, 20e) et un dispositif de terminal sans fil (10, 10a, 10b, 10c, 10d, 10e), comprenant un procédé de transmission sans fil selon la revendication 14 mis en oeuvre par le terminal sans fil portable (20, 20a, 20b, 20c, 20d, 20e) et un procédé de réception sans fil selon la revendication 15 mis en oeuvre par le dispositif de terminal sans fil (10, 10a, 10b, 10c, 10d, 10e).
